# EUROPEAN PATENT APPLICATION

(11) **EP 4 807 794 A1**
(43) Date of publication of application: **16.09.2026**
(21) Application number: 24893012.5
(22) Date of filing: 14.09.2024
(51) Int. Cl.: H01M 4/02, H01M 50/531, H01M 50/103, H01M 50/209, H01M 50/249

(54) **BATTERY CELL, BATTERY, AND ELECTRIC DEVICE**

(30) Priority: 24.11.2023 CN 202323209965 U
(71) Applicant: Contemporary Amperex Technology Co., Limited, Ningde, Fujian 352100 (CN)
(72) Inventor: CHEN, Jiahua, Ningde, Fujian 352100 (CN); TANG, Zheng, Ningde, Fujian 352100 (CN); OUYANG, Shaocong, Ningde, Fujian 352100 (CN); YE, Yonghuang, Ningde, Fujian 352100 (CN); XU, Baoyun, Ningde, Fujian 352100 (CN)
(74) Representative: Kraus & Lederer PartGmbB
(86) International application number: PCT/CN2024/119200
(87) International publication number: WO 2025/107853

(57) **Abstract**

A battery cell (200), a battery (300), and an electric device are provided. The battery cell (200) includes an electrode sheet (100), the electrode sheet (100) includes an electrode sheet body (10) and a tab (20), the electrode sheet body (10) includes a current collector (11) and an active material layer (12), the current collector (11) is connected to the tab (20), the active material layer (12) is disposed on an outer surface of the current collector (11), and the electrode sheet body (10) has a hole structure (13) extending in a thickness direction of the electrode sheet (100).

## Description

### CROSS-REFERENCE TO RELATED APPLICATIONS

This application claims priority to Chinese Patent Application No. 202323209965.5 filed on November 24, 2023, the entire content of which is incorporated herein by reference.

### TECHNICAL FIELD

This application relates to the field of batteries, and in particular, to a battery cell, a battery, and an electric device.

### BACKGROUND

In the related art, the energy density of a battery cell is improved by increasing the compacted density of an electrode sheet. As the compacted density of the electrode sheet increases, the ductility of the electrode sheet increases significantly. Due to the different thicknesses of a tab (that is, an uncoated region) and a coated region (that is, a region coated with an active material layer) of the electrode sheet, during cold pressing, a ductility difference between the coated region and the tab is caused, which easily leads to wavy edges or cracking of the tab.

### SUMMARY

This application aims to solve at least one of the technical problems in the related art to a certain extent.

To this end, one object of this application is to provide a battery cell. During cold pressing of an electrode sheet of the battery cell, a ductility difference between a tab and an electrode sheet body can be reduced, so as to reduce the risk of wavy edges and cracking of the tab.

Another object of this application is to provide a battery.

Another object of this application is to provide an electric device.

According to a first aspect, an embodiment of this application provides a battery cell including:
an electrode sheet, where the electrode sheet includes an electrode sheet body and a tab, the electrode sheet body includes a current collector and an active material layer, the current collector is connected to the tab, the active material layer is disposed on an outer surface of the current collector, and the electrode sheet body has a hole structure extending in a thickness direction of the electrode sheet.

According to the battery cell of this application, the electrode sheet body has the hole structure. A region of the electrode sheet body where the hole structure is provided has a loose structure, so that during cold pressing, the compacted density of the region of the electrode sheet body where the hole structure is provided is smaller than the compacted density of a region of the electrode sheet body where the hole structure is not provided, and the cold pressing ductility gradually decreases from the electrode sheet body to the hole structure region. This can reserve a larger ductility processing margin for the tab, reduce a ductility difference between the tab and the electrode sheet body, and reduce the risk of wavy edges and cracking of the tab, thereby improving the product quality of the battery cell and facilitating the improvement of the energy density of the battery cell.

According to a second aspect, an embodiment of this application further provides a battery including the above battery cell.

According to the battery of this application, including the above battery cell improves the product quality of the battery and helps to improve the energy density of the battery.

According to a third aspect, an embodiment of this application further provides an electric device including the above battery.

According to the electric device of this application, including the above battery improves the product quality of the electric device.

Additional aspects and advantages of this application will be set forth in part in the following description, and become apparent in part from the following description, or be learned through practice of this application.

### BRIEF DESCRIPTION OF DRAWINGS

FIG. 1 is a schematic structural diagram of a vehicle according to some embodiments of this application;
FIG. 2 is an exploded structural view of a battery according to some embodiments of this application;
FIG. 3 is a schematic diagram of a battery cell according to some embodiments of this application;
FIG. 4 is a schematic diagram of a current collector provided with a hole structure according to some embodiments of this application;
FIG. 5 is a schematic diagram of a current collector and an active material layer both provided with a hole structure according to some other embodiments of this application;
FIG. 6 is a schematic diagram of an active material layer provided with a hole structure according to some other embodiments of this application;
FIG. 7 is a schematic diagram of an electrode sheet provided with one hole group according to some embodiments of this application;
FIG. 8 is a schematic diagram of an electrode sheet provided with a plurality of hole groups according to some embodiments of this application; and
FIG. 9 is an enlarged view of portion C in FIG. 7.

### DESCRIPTION OF EMBODIMENTS

To make the objects, technical solutions, and advantages of the embodiments of this application clearer, the technical solutions in the embodiments of this application will be clearly described below with reference to the accompanying drawings in the embodiments of this application. Obviously, the described embodiments are some embodiments of this application, rather than all embodiments. Based on the embodiments in this application, all other embodiments obtained by those of ordinary skill in the art without creative efforts shall fall within the protection scope of this application.

Unless otherwise defined, all technical and scientific terms used in this application have the same meaning as commonly understood by one of ordinary skill in the art to which this application belongs. The terminology used in the application description of this application is for the purpose of describing particular embodiments only, and is not intended to limit this application. The terms "include", "have", and any variations thereof in the specification, claims, and the above description of the drawings of this application are intended to cover non-exclusive inclusions. The terms "first", "second", and the like in the specification, claims, or the above drawings of this application are used to distinguish different objects and are not used to describe a specific order or primary-secondary relationship.

The term "embodiment" mentioned in this application means that a particular feature, structure, or characteristic described in connection with the embodiment can be included in at least one embodiment of this application. The word appearing in various places in the specification does not necessarily mean the same embodiment, nor means an independent or alternative embodiment that is mutually exclusive with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. For those of ordinary skill in the art, the specific meanings of the above terms in this application can be understood according to specific situations.

The term "and/or" in this application is merely an association relationship for describing associated objects and represents that three relationships may exist. For example, A and/or B may represent the following three cases: A alone, both A and B, and B alone. In addition, the character "/" in this application generally indicates an "or" relationship between contextually associated objects.

In the embodiments of this application, the same reference numerals indicate the same components, and for brevity, detailed descriptions of the same components in different embodiments are omitted. It should be understood that the thicknesses, lengths, widths, and other dimensions of various components in the embodiments of this application shown in the drawings, as well as the overall thickness, length, width, and other dimensions of an integrated device are merely exemplary and do not constitute any limitation to this application.

"A plurality of" appearing in this application means two or more (including two).

In this application, the battery cell may include a lithium-ion secondary battery, a lithium-ion primary battery, a lithium-sulfur battery, a sodium-lithium-ion battery, a sodium-ion battery, a magnesium-ion battery, or the like, and the embodiments of this application are not limited thereto. The battery cell may be cylindrical, flat, cuboid, or of other shapes, and the embodiments of this application are not limited thereto. Battery cells are generally divided into three types by packaging method: cylindrical battery cells, prismatic battery cells, and pouch battery cells, and the embodiments of this application are not limited thereto.

The battery mentioned in the embodiments of this application refers to a single physical module that includes one or more battery cells to provide higher voltage and capacity. For example, the battery mentioned in this application may include a battery module, a battery pack, or the like. A battery generally includes a box for packaging one or more battery cells or a plurality of battery modules. The box can prevent liquid or other foreign objects from affecting the charging or discharging of the battery cells.

A battery cell includes a housing, an electrode assembly, and an electrolyte. The housing is configured to accommodate the electrode assembly and the electrolyte. The electrode assembly is composed of a positive electrode sheet, a negative electrode sheet, and a separator. The battery cell mainly works by metal ions moving between the positive electrode sheet and the negative electrode sheet. The positive electrode sheet includes a positive current collector and a positive active material layer, the positive active material layer is applied on a surface of the positive current collector, the positive current collector not coated with the positive active material layer protrudes from the positive current collector coated with the positive active material layer, and the positive current collector not coated with the positive active material layer serves as a positive tab. A lithium-ion battery is used as an example. The positive current collector may be made of aluminum, and the positive active material may be lithium cobalt oxide, lithium iron phosphate, ternary lithium, lithium manganate, or the like. The negative electrode sheet includes a negative current collector and a negative active material layer, the negative active material layer is applied on a surface of the negative current collector, the negative current collector not coated with the negative active material layer protrudes from the negative current collector coated with the negative active material layer, and the negative current collector not coated with the negative active material layer serves as a negative tab. The negative current collector may be made of copper, and the negative active material may be carbon, silicon, or the like. In order to ensure that no fusing occurs when a large current passes through, a plurality of positive tabs are provided and they are stacked together, and a plurality of negative tabs are provided and they are stacked together.

The separator may be made of PP (polypropylene, polypropylene), PE (polyethylene, polyethylene), or the like. In addition, the electrode assembly may be a wound structure or a laminated structure, and the embodiments of this application are not limited thereto.

In recent years, new energy vehicles have developed rapidly. In the field of electric vehicles, power batteries, as the power source of electric vehicles, play an irreplaceable important role. A battery is composed of a box and a plurality of battery cells accommodated in the box. As a core component of new energy vehicles, batteries have high requirements in terms of both safety and cycle life.

In a general battery cell, the energy density of the battery cell is improved by increasing the compacted density of an electrode sheet. As the compacted density of the electrode sheet increases, the ductility of the electrode sheet increases significantly. Due to the different thicknesses of a tab (that is, an uncoated region) and a coated region (that is, a region coated with an active material layer) of the electrode sheet, during cold pressing, a ductility difference between the coated region and the tab is caused, which easily leads to wavy edges or cracking of the tab.

In view of the above considerations, in order to solve the problem of wavy edges or cracking of a tab caused by a ductility difference between a coated region and the tab, an electrode sheet is designed. The electrode sheet includes an electrode sheet body and a tab, the electrode sheet body includes a current collector and an active material layer, the current collector is connected to the tab, the active material layer is disposed on an outer surface of the current collector, and the electrode sheet body has a hole structure extending in a thickness direction of the electrode sheet. During cold pressing, the compacted density of the region of the electrode sheet body where the hole structure is provided is smaller than the compacted density of a region of the electrode sheet body where the hole structure is not provided, and the cold pressing ductility gradually decreases from the electrode sheet body to the hole structure region. This can reserve a larger ductility processing margin for the tab, reduce a ductility difference between the tab and the electrode sheet body, and reduce the risk of wavy edges and cracking of the tab.

The battery disclosed in the embodiments of this application can be, but is not limited to, used in electric devices such as vehicles, ships, or aircraft. A power system of the electric device can be composed of the battery thermal management system, battery, and the like disclosed in this application. This helps to expand the application range of the battery thermal management system and reduce the assembly difficulty of the battery thermal management system.

An embodiment of this application provides an electric device using a battery as a power source. The electric device can be, but is not limited to, a mobile phone, a tablet, a notebook computer, an electric toy, an electric tool, an electric bicycle, an electric vehicle, a ship, a spacecraft, and the like. The electric toy may include a stationary or mobile electric toy, such as a game console, an electric vehicle toy, an electric ship toy, and an electric aircraft toy. The spacecraft may include an airplane, a rocket, a space shuttle, and a spaceship.

The following embodiments are described by taking a vehicle 400 as an example of an electric device in an embodiment of this application for convenience of description.

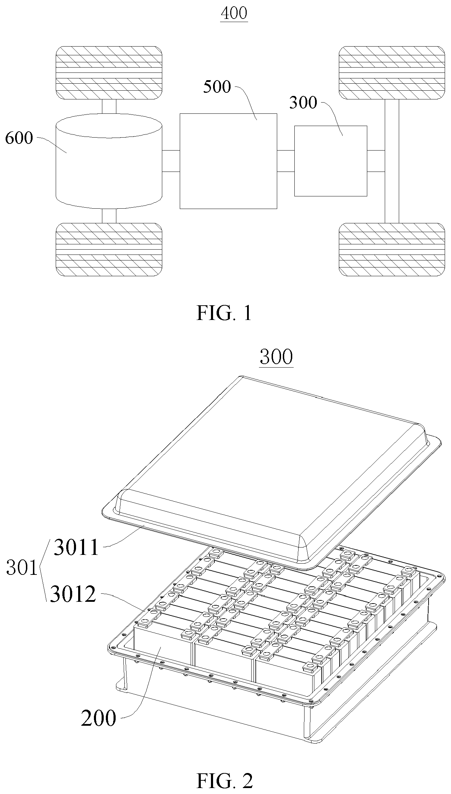

Referring to FIG. 1, FIG. 1 is a schematic structural diagram of a vehicle 400 according to some embodiments of this application. The vehicle 400 may be a fuel vehicle, a gas vehicle, or a new energy vehicle, and the new energy vehicle may be a battery electric vehicle, a hybrid vehicle, a range-extended vehicle, or the like. A battery 300 is provided inside the vehicle 400, and the battery 300 may be provided at the bottom, head, or tail of the vehicle 400. The battery 300 may be configured to power the vehicle 400. For example, the battery 300 may serve as an operating power source for the vehicle 400. The vehicle 400 may further include a controller 500 and a motor 600. The controller 500 is configured to control the battery 300 to power the motor 600, for example, for power needs during starting, navigation, and running of the vehicle 400.

In some embodiments of this application, the battery 300 can not only serve as an operating power source for the vehicle 400, but also as a driving power source for the vehicle 400, replacing or partially replacing fuel or natural gas to provide driving power for the vehicle 400.

Referring to FIG. 2, FIG. 2 is an exploded structural view of a battery 300 according to some embodiments of this application. The battery 300 includes a box 301 and a plurality of battery cells 200, and the battery cells 200 are configured to be accommodated in the box 301. The box 301 is configured to provide an assembly space for the battery cells 200, and the box 301 may adopt a plurality of structures. In some embodiments, the box 301 may include a first box body 3011 and a second box body 3012, the first box body 3011 and the second box body 3012 fit with each other, and the first box body 3011 and the second box body 3012 together define an assembly space for accommodating the battery cells 200. The second box body 3012 may be a hollow structure with one end open, the first box body 3011 may be a plate-like structure, and the first box body 3011 covers the open side of the second box body 3012, so that the first box body 3011 and the second box body 3012 together define the assembly space. The first box body 3011 and the second box body 3012 may alternatively both be hollow structures with one side open, and the open side of the first box body 3011 fits with the open side of the second box body 3012. Certainly, the box 301 formed by the first box body 3011 and the second box body 3012 may have a plurality of shapes, such as a cylinder or a cuboid.

In the battery 300, the plurality of battery cells 200 may be connected in series, in parallel, or in series-parallel. The series-parallel refers to both series and parallel connections of the plurality of battery cells 200. The plurality of battery cells 200 may be directly connected in series, in parallel, or in series-parallel, and then the whole formed by the plurality of battery cells 200 is accommodated in the box 301. Certainly, the battery 300 may alternatively be formed by first connecting the plurality of battery cells 200 in series, in parallel, or in series-parallel to form battery 300 modules, then connecting the plurality of battery 300 modules in series, in parallel, or in series-parallel to form a whole, and accommodating the whole in the box 301. The battery 300 may further include other structures. For example, the battery 300 may further include a busbar component for achieving electrical connection between the plurality of battery cells 200.

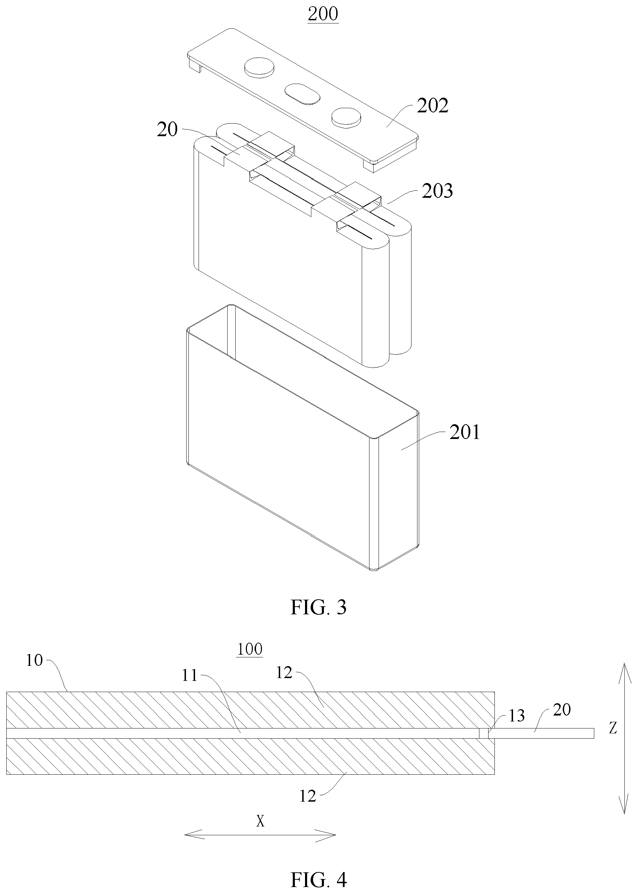

The electrode sheet 100 according to the embodiments of this application is described below with reference to FIGs. 3 to 9, and the electrode sheet 100 is a component of the battery cell 200.

According to some embodiments of this application, this application provides an electrode sheet 100 including an electrode sheet body 10 and a tab 20. The electrode sheet body 10 includes a current collector 11 and an active material layer 12, the current collector 11 is connected to the tab 20, the active material layer 12 is disposed on an outer surface of the current collector 11, and the electrode sheet body 10 has a hole structure 13 extending in a thickness direction of the electrode sheet 100.

The electrode sheet 100 includes the electrode sheet body 10 and the tab 20, and the electrode sheet body 10 is a coated region. In other words, the electrode sheet body 10 is a region of the current collector 11 coated with the active material layer 12, and the tab 20 is a region of the current collector 11 not coated with the active material layer 12. The current collector 11 is connected to the tab 20, and the current collector 11 and the tab 20 may be integrally formed. The current collector 11 has a first surface and a second surface that are disposed opposite, both the first surface and the second surface are coated with the active material layer 12, and the current collector 11 is located between the two active material layers 12. The electrode sheet body 10 has the hole structure 13 extending in the thickness direction of the electrode sheet 100, the thickness direction of the electrode sheet 100 refers to the Z direction in FIG. 4, and the hole structure 13 may be formed on the electrode sheet body 10 through laser drilling. The region of the electrode sheet body 10 where the hole structure 13 is provided has a looser structure compared to the region of the electrode sheet body 10 where the hole structure 13 is not provided, so that during cold pressing, the compacted density of the region of the electrode sheet body 10 where the hole structure 13 is provided is smaller than the compacted density of the region of the electrode sheet body 10 where the hole structure 13 is not provided, and the cold pressing ductility gradually decreases from the electrode sheet body 10 to the hole structure 13 region. Therefore, the hole structure 13 can absorb the ductility of the electrode sheet body 10, reserve a larger ductility processing margin for the tab 20, reduce a ductility difference between the tab 20 and the electrode sheet body 10, and reduce the risk of wavy edges and cracking of the tab 20.

In the above technical solution, the electrode sheet body 10 has the hole structure 13, and the region of the electrode sheet body 10 where the hole structure 13 is provided has a loose structure, so that during cold pressing, the compacted density of the region of the electrode sheet body 10 where the hole structure 13 is provided is smaller than the compacted density of the region of the electrode sheet body 10 where the hole structure 13 is not provided, and the cold pressing ductility gradually decreases from the electrode sheet body 10 to the hole structure 13 region. This can reserve a larger ductility processing margin for the tab 20, reduce the ductility difference between the tab 20 and the electrode sheet body 10, and reduce the risk of wavy edges and cracking of the tab 20.

According to some embodiments of this application, as shown in FIGs. 4 to 6, the current collector 11 and/or the active material layer 12 is formed with the hole structure 13.

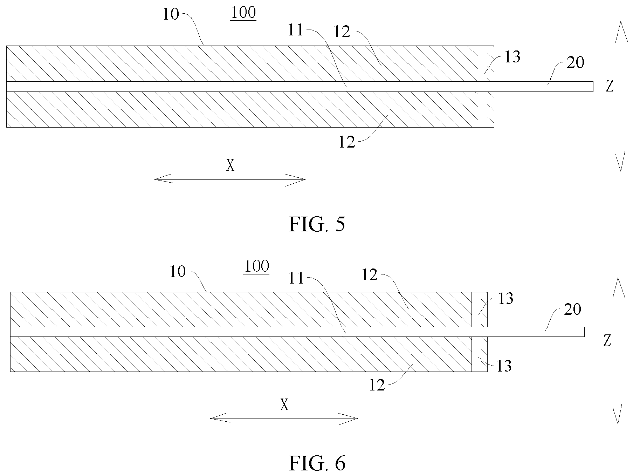

That the current collector 11 and/or the active material layer 12 is formed with the hole structure 13 can also be understood as: as shown in FIG. 4, the current collector 11 is formed with the hole structure 13; or as shown in FIG. 6, the active material layer 12 is formed with the hole structure 13; or as shown in FIG. 5, both the current collector 11 and the active material layer 12 are formed with the hole structure 13. This application takes both the current collector 11 and the active material layer 12 being formed with the hole structure 13 as an example for description. In a case that the current collector 11 and the two active material layers 12 are all formed with the hole structure 13, the hole structure 13 may penetrate through the electrode sheet body 10 in the thickness direction of the electrode sheet 100. The hole structure 13 may be formed on the electrode sheet body 10 through laser drilling, thereby facilitating the formation of the hole structure 13 on the electrode sheet body 10 and helping to improve the production efficiency of the electrode sheet 100. Alternatively, in a case that the current collector 11 and one active material layer 12 are formed with the hole structure 13, the hole structure 13 may be formed on the current collector 11 and the active material layer 12 through laser drilling. It should be noted that the hole structure 13 on the current collector 11 and the hole structure 13 on the active material layer 12 may be aligned, or the hole structure 13 on the current collector 11 and the hole structure 13 on the active material layer 12 may be staggered. If both the active material layers 12 are formed with the hole structure 13, the hole structures 13 on the two active material layers 12 may be aligned, or the hole structures 13 on the two active material layers 12 may be staggered.

In the above technical solution, the current collector 11 and/or the active material layer 12 being formed with the hole structure 13 facilitates a loose structure for the region of the electrode sheet body 10 where the hole structure 13 is provided, so that during cold pressing, the compacted density of the region of the electrode sheet body 10 where the hole structure 13 is provided is smaller than the compacted density of the region of the electrode sheet body 10 where the hole structure 13 is not provided, and the cold pressing ductility gradually decreases from the electrode sheet body 10 to the hole structure 13 region. This helps to reserve a larger ductility processing margin for the tab 20, helps to reduce the ductility difference between the tab 20 and the electrode sheet body 10, and helps to reduce the risk of wavy edges and cracking of the tab 20.

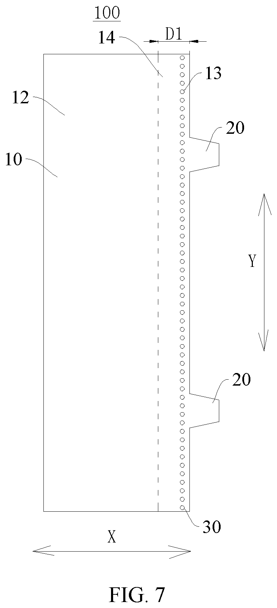

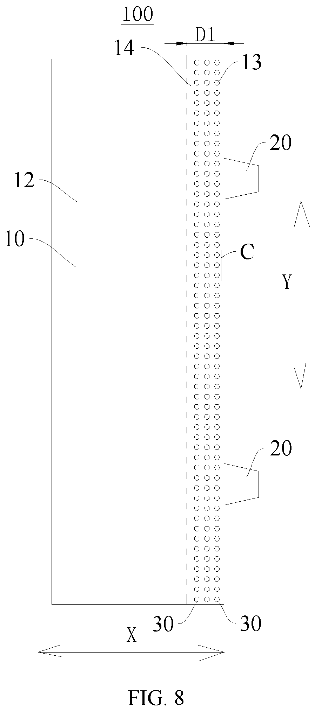

According to some embodiments of this application, as shown in FIGs. 7 and 8, the electrode sheet body 10 has a hole arrangement region 14 adjacent to the tab 20, and the hole arrangement region 14 has the hole structure 13.

The hole arrangement region 14 refers to a region of the electrode sheet body 10 where the hole structure 13 can be provided, and the hole structure 13 is provided in the hole arrangement region 14. The hole arrangement region 14 is disposed adjacent to the tab 20. In other words, the hole arrangement region 14 is located at a position of the electrode sheet body 10 adjacent to the tab 20, and the hole arrangement region 14 is located at an edge position of the electrode sheet body 10. With the hole structure 13 provided in the hole arrangement region 14, the hole structure 13 can be disposed close to the tab 20, allowing for a certain ductility gradient from the electrode sheet body 10 to the tab 20, so that the hole structure 13 can provide a certain additional ductility space for the tab 20. This can further reduce the ductility difference between the tab 20 and the electrode sheet body 10, and further reduce the risk of wavy edges and cracking of the tab 20. In addition, with the hole structure 13 provided in the hole arrangement region 14, a molten pool can be formed at the edge of the electrode sheet body 10, thereby enhancing the strength of the edge of the electrode sheet body 10 and reducing the risk of cracking at the edge of the electrode sheet body 10.

In the above technical solution, with the hole structure 13 provided in the hole arrangement region 14, the hole structure 13 can be disposed close to the tab 20, allowing for a certain ductility gradient from the electrode sheet body 10 to the tab 20, so that the hole structure 13 can provide a certain additional ductility space for the tab 20. This can further reduce the ductility difference between the tab 20 and the electrode sheet body 10, and further reduce the risk of wavy edges and cracking of the tab 20. In addition, a molten pool can be formed at the edge of the electrode sheet body 10, thereby enhancing the strength of the edge of the electrode sheet body 10 and reducing the risk of cracking at the edge of the electrode sheet body 10.

According to some embodiments of this application, as shown in FIGs. 7 and 8, in an arrangement direction of the electrode sheet body 10 and the tab 20, a distance between a tab 20-adjacent edge to a tab 20-distant edge of the hole arrangement region 14 is greater than 0 mm and less than or equal to 20 mm.

The arrangement direction of the electrode sheet body 10 and the tab 20 refers to the X direction in FIG. 7, and the arrangement direction of the electrode sheet body 10 and the tab 20 is perpendicular to the thickness direction of the electrode sheet 100. In the arrangement direction of the electrode sheet body 10 and the tab 20, the width dimension of the hole arrangement region 14 is D1, satisfying the relationship: 0 mm < D1 ≤ 20 mm. For example, the width dimension of the hole arrangement region 14 may be 1 mm, 5 mm, 10 mm, 20 mm, or the like. With the width dimension of the hole arrangement region 14 set to be greater than 0 mm and less than or equal to 20 mm, the hole structure 13 is provided within a width range of 20 mm close to the tab 20 at the edge of the electrode sheet body 10. This can provide a certain additional ductility space for the tab 20, helps to reduce a punching region on the electrode sheet body 10, makes the size setting range of the hole arrangement region 14 reasonable, and helps to reduce processing steps; and can also reduce damage to the electrode sheet body 10. In addition, a molten pool can be formed at the edge of the electrode sheet body 10, further enhancing the strength of the edge of the electrode sheet body 10 and further reducing the risk of cracking at the edge of the electrode sheet body 10.

In the above technical solution, with the width dimension of the hole arrangement region 14 set to be greater than 0 mm and less than or equal to 20 mm, the hole structure 13 is provided within a width range of 20 mm close to the tab 20 at the edge of the electrode sheet body 10. This can provide a certain additional ductility space for the tab 20, helps to reduce a punching region on the electrode sheet body 10, makes the size setting range of the hole arrangement region 14 reasonable, and helps to reduce processing steps; and can also reduce damage to the electrode sheet body 10. In addition, a molten pool can be formed at the edge of the electrode sheet body 10, further enhancing the strength of the edge of the electrode sheet body 10 and further reducing the risk of cracking at the edge of the electrode sheet body 10.

According to some embodiments of this application, in the arrangement direction of the electrode sheet body 10 and the tab 20, the distance between the tab 20-adjacent edge to the tab 20-distant edge of the hole arrangement region 14 is greater than 0 mm and less than or equal to 10 mm.

The arrangement direction of the electrode sheet body 10 and the tab 20 refers to the X direction in FIG. 7, and the arrangement direction of the electrode sheet body 10 and the tab 20 is perpendicular to the thickness direction of the electrode sheet 100. In the arrangement direction of the electrode sheet body 10 and the tab 20, the width dimension of the hole arrangement region 14 is D1, satisfying the relationship: 0 mm < D1 ≤ 10 mm. For example, the width dimension of the hole arrangement region 14 may be 1 mm, 5 mm, 10 mm, or the like. This application takes the width dimension of the hole arrangement region 14 being 10 mm as an example for description. With the width dimension of the hole arrangement region 14 set to be greater than 0 mm and less than or equal to 10 mm, the hole structure 13 is provided within a width range of 10 mm close to the tab 20 at the edge of the electrode sheet body 10. This can provide a certain additional ductility space for the tab 20, better helps to reduce a punching region on the electrode sheet body 10, makes the size setting range of the hole arrangement region 14 reasonable, and helps to reduce processing steps; and can also reduce damage to the electrode sheet body 10. In addition, a molten pool can be formed at the edge of the electrode sheet body 10, further enhancing the strength of the edge of the electrode sheet body 10 and further reducing the risk of cracking at the edge of the electrode sheet body 10.

In the above technical solution, with the width dimension of the hole arrangement region 14 set to be greater than 0 mm and less than or equal to 10 mm, the hole structure 13 is provided within a width range of 10 mm close to the tab 20 at the edge of the electrode sheet body 10. This can provide a certain additional ductility space for the tab 20, better helps to reduce a punching region on the electrode sheet body 10, makes the size setting range of the hole arrangement region 14 more reasonable, and helps to reduce processing steps, and can also reduce damage to the electrode sheet body 10. In addition, a molten pool can be formed at the edge of the electrode sheet body 10, further enhancing the strength of the edge of the electrode sheet body 10 and further reducing the risk of cracking at the edge of the electrode sheet body 10.

According to some embodiments of this application, as shown in FIGs. 7 and 8, a plurality of hole structures 13 are provided, the plurality of hole structures 13 form at least one hole group 30, the hole group 30 includes a plurality of hole structures 13, the plurality of hole structures 13 in each hole group 30 are arranged in a first direction of the electrode sheet 100, where the first direction, the thickness direction of the electrode sheet 100, and the arrangement direction of the electrode sheet body 10 and the tab 20 are perpendicular to each other.

The plurality of hole structures 13 may be provided, the plurality of hole structures 13 form at least one hole group 30, each hole group 30 includes a plurality of hole structures 13, and the plurality of hole structures 13 in each hole group 30 are arranged in the first direction of the electrode sheet 100. The first direction of the electrode sheet 100 refers to the Y direction in FIG. 7, and the arrangement direction of the electrode sheet body 10 and the tab 20, the first direction, and the thickness direction of the electrode sheet 100 are perpendicular to each other. Since cold pressing is performed along a traveling direction, cold pressing is performed in the first direction. Therefore, the ductility required for the electrode sheet body 10 in the first direction is large. Arranging the plurality of hole structures 13 in each hole group 30 in the first direction of the electrode sheet 100 helps to reduce the ductility of the electrode sheet body 10. During cold pressing, the compacted density of the region of the electrode sheet body 10 where the hole structure 13 is provided is smaller than the compacted density of the region of the electrode sheet body 10 where the hole structure 13 is not provided, the cold pressing ductility gradually decreases from the electrode sheet body 10 to the hole structure 13 region. This can reserve a larger ductility processing margin for the tab 20, further reduce the ductility difference between the tab 20 and the electrode sheet body 10, and further reduce the risk of wavy edges and cracking of the tab 20.

In the above technical solution, arranging the plurality of hole structures 13 in each hole group 30 in the first direction of the electrode sheet 100 helps to reduce the ductility of the electrode sheet body 10. During cold pressing, the compacted density of the region of the electrode sheet body 10 where the hole structure 13 is provided is smaller than the compacted density of the region of the electrode sheet body 10 where the hole structure 13 is not provided, the cold pressing ductility gradually decreases from the electrode sheet body 10 to the hole structure 13 region. This can reserve a larger ductility processing margin for the tab 20, further reduce the ductility difference between the tab 20 and the electrode sheet body 10, and further reduce the risk of wavy edges and cracking of the tab 20.

According to some embodiments of this application, as shown in FIG. 8, the plurality of hole structures 13 forms a plurality of hole groups 30, and the plurality of hole groups 30 are arranged in the arrangement direction of the electrode sheet body 10 and the tab 20.

The electrode sheet body 10 has the plurality of hole structures 13 thereon, the plurality of hole structures 13 form the plurality of hole groups 30, and the plurality of hole groups 30 are arranged in the arrangement direction of the electrode sheet body 10 and the tab 20. The arrangement direction of the electrode sheet body 10 and the tab 20, the first direction, and the thickness direction of the electrode sheet 100 are perpendicular to each other. The plurality of hole groups 30 are sequentially spaced in the arrangement direction of the electrode sheet body 10 and the tab 20, and the plurality of hole structures 13 in each hole group 30 are sequentially arranged in the first direction of the electrode sheet 100. With the plurality of hole structures 13 provided, the number of the hole structures 13 on the electrode sheet body 10 can be increased, better helping to reduce the ductility of the electrode sheet body 10, further reducing the ductility difference between the tab 20 and the electrode sheet body 10, and further reducing the risk of wavy edges and cracking of the tab 20. Moreover, with the plurality of hole groups 30 arranged in the arrangement direction of the electrode sheet body 10 and the tab 20, a larger ductility processing margin can be reserved for the tab 20, further reducing the ductility difference between the tab 20 and the electrode sheet body 10, and further reducing the risk of wavy edges and cracking of the tab 20.

In the above technical solution, with the plurality of hole structures 13 provided, the number of the hole structures 13 on the electrode sheet body 10 can be increased, better helping to reduce the ductility of the electrode sheet body 10, further reducing the ductility difference between the tab 20 and the electrode sheet body 10, and further reducing the risk of wavy edges and cracking of the tab 20. Moreover, with the plurality of hole groups 30 arranged in the arrangement direction of the electrode sheet body 10 and the tab 20, a larger ductility processing margin can be reserved for the tab 20, further reducing the ductility difference between the tab 20 and the electrode sheet body 10, and further reducing the risk of wavy edges and cracking of the tab 20.

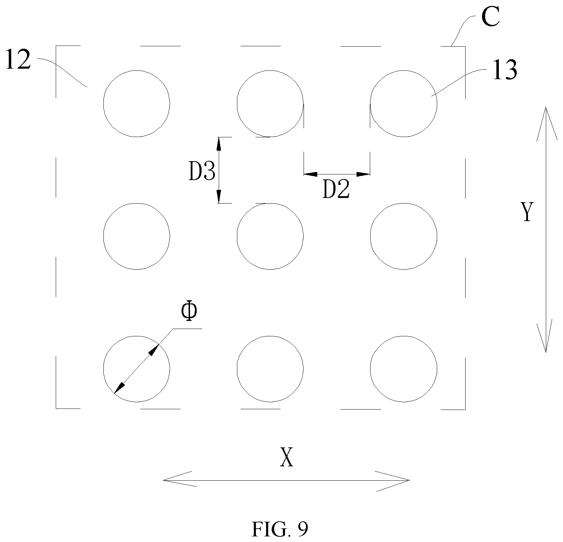

According to some embodiments of this application, as shown in FIG. 9, in the arrangement direction of the electrode sheet body 10 and the tab 20, a distance between two adjacent hole groups 30 is greater than 0 mm and less than or equal to 4 mm.

In the arrangement direction of the electrode sheet body 10 and the tab 20, the distance between two adjacent hole groups 30 is D2, satisfying the relationship: 0 mm < D2 ≤ 4 mm. For example, the distance between two adjacent hole groups 30 may be 1 mm, 2 mm, 3 mm, 4 mm, or the like. Since cold pressing is performed along a traveling direction, the ductility required for the electrode sheet body 10 in the arrangement direction of the electrode sheet body 10 and the tab 20 is small. With the distance between two adjacent hole groups 30 set to be greater than 0 mm and less than or equal to 4 mm, the distance between two adjacent hole groups 30 can be made appropriate, and the arrangement positions of the plurality of hole structures 13 can be made more compact, thereby better helping to reduce the ductility difference between the tab 20 and the electrode sheet body 10, and further reducing the risk of wavy edges and cracking of the tab 20.

In the above technical solution, with the distance between two adjacent hole groups 30 set to be greater than 0 mm and less than or equal to 4 mm, the distance between two adjacent hole groups 30 can be made appropriate, and the arrangement positions of the plurality of hole structures 13 can be made more compact, thereby better helping to reduce the ductility difference between the tab 20 and the electrode sheet body 10, and further reducing the risk of wavy edges and cracking of the tab 20.

According to some embodiments of this application, as shown in FIG. 9, the distance between two adjacent hole structures 13 in each hole group 30 is greater than or equal to 0.5 mm and less than or equal to 10 mm.

The distance between two adjacent hole structures 13 in each hole group 30 is D3, satisfying the relationship 0.5 mm ≤ D3 ≤ 10 mm. For example, the distance between two adjacent hole structures 13 in each hole group 30 may be 0.5 mm, 0.6 mm, 5 mm, 6 mm, 10 mm, or the like. It should be noted that if the distance between two adjacent hole structures 13 in each hole group 30 is less than 0.5 mm, it will affect the strength of the electrode sheet body 10. If the distance between two adjacent hole structures 13 in each hole group 30 is greater than 10 mm, it will not achieve the effect of reducing the ductility of the electrode sheet body 10. Therefore, in this application, with the distance between two adjacent hole structures 13 in each hole group 30 set to be greater than or equal to 0.5 mm and less than or equal to 10 mm, the electrode sheet body 10 can have sufficient strength, and the effect of reducing the ductility of the electrode sheet body 10 can also be achieved, thereby reducing the ductility difference between the tab 20 and the electrode sheet body 10, and effectively reducing the risk of wavy edges and cracking of the tab 20.

In the above technical solution, with the distance between two adjacent hole structures 13 in each hole group 30 set to be greater than or equal to 0.5 mm and less than or equal to 10 mm, the electrode sheet body 10 can have sufficient strength, and the effect of reducing the ductility of the electrode sheet body 10 can also be achieved, thereby reducing the ductility difference between the tab 20 and the electrode sheet body 10, and effectively reducing the risk of wavy edges and cracking of the tab 20.

According to some embodiments of this application, as shown in FIG. 9, the hole structure 13 is a circular hole, and an aperture of the hole structure 13 is greater than or equal to 0.1 µm and less than or equal to 50 µm.

When the hole structure 13 is a circular hole, the aperture of the hole structure 13 is the diameter of the hole. The aperture of the hole structure 13 is Φ, where 0.1 µm ≤ Φ ≤ 50 µm. For example, the aperture of the hole structure 13 may be 0.1 µm, 0.5 µm, 1 µm, 10 µm, 20 µm, 30 µm, 50 µm, or the like. It should be noted that if the aperture of the hole structure 13 is less than 0.1 µm, the aperture of the hole structure 13 will be smaller than a particle size of the active material layer 12, and particles of the active material layer 12 cannot fall into the hole structure 13, failing to achieve the effect that the compacted density of the region of the electrode sheet body 10 where the hole structure 13 is provided is smaller than the compacted density of the region of the electrode sheet body 10 where the hole structure 13 is not provided. If the aperture of the hole structure 13 is greater than 50 µm, it easily affects the strength of the electrode sheet body 10, and easily leads to cracking of the electrode sheet body 10, failing to achieve the effect that the compacted density of the region of the electrode sheet body 10 where the hole structure 13 is provided is smaller than the compacted density of the region of the electrode sheet body 10 where the hole structure 13 is not provided either. Therefore, in this application, with the aperture of the hole structure 13 being greater than or equal to 0.1 µm and less than or equal to 50 µm, the compacted density of the region of the electrode sheet body 10 where the hole structure 13 is provided can be smaller than the compacted density of the region of the electrode sheet body 10 where the hole structure 13 is not provided, and the electrode sheet body 10 can also have sufficient strength, thereby reducing the risk of cracking of the electrode sheet body 10.

In the above technical solution, with the aperture of the hole structure 13 being greater than or equal to 0.1 µm and less than or equal to 50 µm, the compacted density of the region of the electrode sheet body 10 where the hole structure 13 is provided can be smaller than the compacted density of the region of the electrode sheet body 10 where the hole structure 13 is not provided, and the electrode sheet body 10 can also have sufficient strength, thereby reducing the risk of cracking of the electrode sheet body 10.

According to some embodiments of this application, the electrode sheet 100 may be a negative electrode sheet 100, and the active material layer 12 is hard carbon. The active material layer 12 may be made of hard carbon, but this application is not limited thereto. The active material layer 12 may alternatively be made of soft carbon. This application takes the active material layer 12 being made of hard carbon as an example for description. Hard carbon is hard in nature and has large ductility. With the electrode sheet 100 set as the negative electrode sheet 100, the energy density of the battery cell 200 can be improved.

According to a second aspect, an embodiment of this application further provides a battery cell 200 including the electrode sheet 100 of the above embodiments. With the electrode sheet body 10 having the hole structure 13, a larger ductility processing margin can be reserved for the tab 20, a ductility difference between the tab 20 and the electrode sheet body 10 can be reduced, and the risk of wavy edges and cracking of the tab 20 can be reduced, thereby improving the product quality of the battery cell 200 and helping to improve the energy density of the battery cell 200.

According to some embodiments of this application, the battery cell 200 is a sodium-ion battery 300.

In the above technical solution, setting the battery cell 200 as the sodium-ion battery 300 can improve the product quality of the battery cell 200, and help to improve the energy density of the battery cell 200.

As shown in FIG. 3, the battery cell 200 may include a housing 201, a cover 202, an electrode assembly 203, and an electrolyte. The housing 201 is configured to accommodate the electrode assembly 203 and the electrolyte, and the cover 202 is provided at an open end of the housing 201.

According to a third aspect, an embodiment of this application further provides a battery 300 including the battery cell 200 of the above embodiments.

According to a fourth aspect, an embodiment of this application further provides an electric device including the battery 300 of the above embodiments.

According to some embodiments of this application, referring to FIG. 5, this application provides an electrode sheet 100. The electrode sheet 100 includes: an electrode sheet body 10 and a tab 20, the electrode sheet body 10 includes a current collector 11 and an active material layer 12, the current collector 11 is connected to the tab 20, the active material layer 12 is disposed on an outer surface of the current collector 11, the electrode sheet body 10 has a hole structure 13 penetrating through the electrode sheet body 10 in a thickness direction of the electrode sheet 100, and the hole structure 13 is disposed close to the tab 20.

It should be noted that, in the case of no conflict, the embodiments in this application and the features in the embodiments can be combined with each other.

In the description of this specification, the description referring to the terms "one embodiment", "some embodiments", "exemplary embodiment", "example", "specific example", "some examples", or the like means that the specific features, structures, materials, or characteristics described in connection with the embodiment or example are included in at least one embodiment or example of this application. In the specification, the schematic representations of the above terms do not necessarily refer to the same embodiment or example. Moreover, the specific features, structures, materials, or characteristics described can be combined in any one or more embodiments or examples in an appropriate manner.

Although the embodiments of this application have been shown and described, those of ordinary skill in the art can understand that: various changes, modifications, alterations, and variations can be made to these embodiments without departing from the principles and spirit of this application, and the scope of this application is defined by the claims and their equivalents.

## Claims

1. A battery cell comprising:
an electrode sheet, wherein the electrode sheet comprises an electrode sheet body and a tab, the electrode sheet body comprises a current collector and an active material layer, the current collector is connected to the tab, the active material layer is disposed on an outer surface of the current collector, and the electrode sheet body has a hole structure extending in a thickness direction of the electrode sheet.

2. The battery cell according to claim 1, wherein the current collector and/or the active material layer is formed with the hole structure.

3. The battery cell according to claim 1 or 2, wherein the electrode sheet body has a hole arrangement region adjacent to the tab, and the hole arrangement region has the hole structure.

4. The battery cell according to claim 3, wherein, in an arrangement direction of the electrode sheet body and the tab, a distance between a tab-adjacent edge and a tab-distant edge of the hole arrangement region is greater than 0 mm and less than or equal to 20 mm.

5. The battery cell according to claim 4, wherein the distance between the tab-adjacent edge and the tab-distant edge of the hole arrangement region is greater than 0 mm and less than or equal to 10 mm.

6. The battery cell according to any one of claims 1 to 5, wherein a plurality of hole structures are provided, the plurality of hole structures form at least one hole group, the hole group comprises a plurality of the hole structures, and the plurality of hole structures in each hole group are arranged in a first direction of the electrode sheet, wherein the first direction, the thickness direction of the electrode sheet, and the arrangement direction of the electrode sheet body and the tab are perpendicular to each other.

7. The battery cell according to claim 6, wherein the plurality of hole structures forms a plurality of hole groups, and the plurality of hole groups are arranged in the arrangement direction of the electrode sheet body and the tab.

8. The battery cell according to claim 7, wherein in the arrangement direction of the electrode sheet body and the tab, a distance between two adjacent hole groups is greater than 0 mm and less than or equal to 4 mm.

9. The battery cell according to any one of claims 6 to 8, wherein a distance between two adjacent hole structures in each hole group is greater than or equal to 0.5 mm and less than or equal to 10 mm.

10. The battery cell according to any one of claims 1 to 9, wherein the hole structure is a circular hole, and an aperture of the hole structure is greater than or equal to 0.1 µm and less than or equal to 50 µm.

11. The battery cell according to any one of claims 1 to 10, wherein the electrode sheet is a negative electrode sheet, and the active material layer is hard carbon.

12. The battery cell according to any one of claims 1 to 11, wherein the battery cell is a sodium-ion battery.

13. A battery comprising the battery cell according to any one of claims 1 to 12.

14. An electric device comprising the battery according to claim 13.
